# EUROPÄISCHE PATENTSCHRIFT

(11) **EP 2 825 713 B1**
(45) Veröffentlichungstag und Bekanntmachung des Hinweises auf die Patenterteilung: **29.04.2020**
(21) Anmeldenummer: 13715905.9
(22) Anmeldetag: 15.03.2013
(51) Int. Cl.: E05G 1/00, E05G 1/14

(54) **VORRICHTUNG ZUM UNGÜLTIGMACHEN VON WERTSCHEINEN UND GELDKASSETTE MIT EINER SOLCHEN VORRICHTUNG**
DEVICE FOR INVALIDATING VALUE NOTES AND CASSETTE WITH SUCH A DEVICE
DISPOSITIF DE DEGRADATION DE BILLETS DE VALEUR ET CASSETTE AVEC UN TEL DISPOSITIF

(30) Priorität: 16.03.2012 DE 102012102223
(43) Veröffentlichungstag der Anmeldung: 21.01.2015
(73) Patentinhaber: Wincor Nixdorf International GmbH, 33106 Paderborn (DE)
(72) Erfinder: BERENDES, Elmar, 34414 Warburg (Nörde) (DE)
(86) Internationale Anmeldenummer: PCT/EP2013/055337
(87) Internationale Veröffentlichungsnummer: WO 2013/135857

(56) Entgegenhaltungen:
- WO-A1-92/06611
- WO-A1-98/01646
- WO-A1-2006/084853
- WO-A1-2011/070067
- WO-A1-2011/144611
- FR-A1- 2 792 509
- FR-A1- 2 858 005

## Beschreibung

Die Erfindung betrifft eine Vorrichtung zum Ungültigmachen von Wertscheinen mit mindestens einem kombinierten Farbstoff- und Auslösemodul, das über Verbindungselemente mit einem Wertscheintransportbehälter verbindbar ist. Die Vorrichtung umfasst eine Farbstoffverteileinheit zum Verteilen von aus einer Auslassöffnung des Farbstoff- und Auslösemoduls austretenden Farbstoff auf die ungültig zu machenden Wertscheine. Solche Vorrichtungen werden auch als Tintenkit bezeichnet. Ferner betrifft die Erfindung eine Geldkassette zur Aufnahme von Banknoten mit einer Vorrichtung zum Ungültigmachen von Wertscheinen.

Aus dem Dokument WO 2006/084853 A1 ist ein Einbaukit zum Ausstatten eines Koffers als multifunktionales tragbares Sicherheitssystem bekannt, bei dem im Koffer befindliche Wertgegenstände geschützt werden. Das Einbaukit umfasst einen elektrisch auslösbaren Zünder sowie ein Tintenmodul zum Einfärben der Wertgegenstände. Der elektrisch auslösbare Zünder ist mit Hilfe einer Steuereinheit auslösbar, sodass der Farbstoff nach dem Auslösen mit Druck beaufschlagt ist und der Farbstoff aus einem Austrittbereich zum Abgeben des Farbstoffs austritt. Die Steuereinheit steuert den Zünder in Abhängigkeit von Sensorsignalen an.

Aus dem Dokument WO 2011/144611 A1 ist eine Vorrichtung zum Ungültigmachen von Wertscheinen bekannt, bei der eine Auslöseeinheit, die den in einem Farbstoffbehälter befindlichen Farbstoff in Kontakt mit Wertscheinen bringt, innerhalb des Farbstoffbehälters angeordnet ist. Dadurch ist eine sehr einfache kompakte und manipulationssichere Anordnung von Farbstoffbehälter und Auslöseeinheit angegeben. Die Auslöseeinheit umfasst einen Gasvorrat, der über ein geschlossenes Verschlusselement mit dem Farbstoffbehälter verbunden ist. Dieses Verschlusselement kann erforderlichenfalls durch eine geeignete Ansteuerung der Steuereinheit geöffnet werden. Zum Öffnen dieser Verbindung kann beispielsweise eine Sprengkapsel vorgesehen sein. Die zum Öffnen des Verschlusselements, die zum Auslösen der Sprengkapsel und/oder die zum Betreiben der Steuereinheit erforderliche Energie wird über eine im Wertscheintransportbehälter angeordnete Batterie bereitgestellt.

Insbesondere der Farbstoff und die Batterie unterliegen einem Alterungs- bzw. Entladungsprozess und müssen innerhalb vorgegebener Wartungsintervalle ausgetauscht werden. Ein Austausch von Farbstoff- und Auslösemodulen sowie der Batterie kann bei bekannten Wertscheintransportbehältern nur durch den Hersteller oder spezialisierte Firmen erfolgen. Dazu ist ein aufwendiger Transport der Wertscheintransportbehälter zu diesen spezialisierten Firmen erforderlich. Ferner ist der Austausch mit relativ großem Montageaufwand verbunden, sodass erhebliche Kosten für die Wartung von Vorrichtungen zum Ungültigmachen von Wertscheinen in Wertscheintransportbehältern aufgewendet werden müssen.

Aus dem Dokument FR 2 858 005 A1 ist eine Vorrichtung zum Entwerten von Wertscheinen nach dem Oberbegriff des Anspruchs 1 bekannt, bei der die Wertscheine durch Aufsprühen von Tinte entwertet werden. Die Entwertungseinheit hat ein Gehäuse, an dessen Unterseite zwei L-förmige Schienen angeordnet sind, die in komplementär ausgebildete, ebenfalls L-förmige Schienen der Geldkassette eingeschoben werden, um die Entwertungseinheit hierdurch an der Geldkassette zu befestigen.

Aus dem Dokument FR 2 792 509 A1 ist ein Geldkoffer bekannt, der eine manuell auslösbare Entwertungseinheit umfasst, bei der mit Hilfe einer CO₂-Patrone Tinte auf die im Geldkoffer aufgenommenen Geldscheine gesprüht werden kann. Die Entwertungseinheit ist hierbei an der Außenseite des Geldkoffers angeordnet und kann über eine Schnellkopplung an diesem befestigt werden.

Das Dokument WO 2006/084853 A1 beschreibt einen Geldkoffer mit einer Entwertungseinheit,die drei Tintenbehälter umfasst.

Aufgabe der Erfindung ist es, eine Vorrichtung zum Ungültigmachen von Wertscheinen und eine Geldkassette mit einer solchen Vorrichtung anzugeben, bei denen ein einfacher Austausch von zu wartenden Komponenten der Vorrichtung möglich ist.

Diese Aufgabe wird durch eine Vorrichtung zum Ungültigmachen von Wertscheinen mit den Merkmalen des Anspruchs 1 gelöst. Vorteilhafte Weiterbildungen der Erfindung sind in den abhängigen Ansprüchen angegeben.

Durch die lösbare Steckverbindung zwischen in dem ersten Verbindungselement und dem zweiten Verbindungselement herstellbaren ist ein einfaches Entfernen eines auszutauschenden Farbstoff- und Auslösemoduls aus dem Wertscheintransportbehälter möglich, wobei ein neues oder regeneriertes Farbstoff- und Auslösemodul über das erste Verbindungselement und dem zweiten Verbindungselement des Wertscheintransportbehälters einfach verbunden werden kann, indem die Steckverbindung zwischen dem ersten Verbindungselement und dem zweiten Verbindungselement hergestellt wird. Dabei kann das erste Verbindungselement zusammen mit dem Farbstoff- und Auslösemodul ausgetauscht werden, wobei das erste Verbindungselement über eine lösbare oder nicht lösbare Verbindung mit dem Farbstoff- und Auslösemodul verbunden oder in das Farbstoff- und Auslösemodul integriert sein kann. Vorzugsweise sind die Farbstoffverteileinheit sowie Steuer- oder Zündkabel zum aktivieren des Farbstoffs- und Auslösemoduls über geeignete Steckverbinder mit dem Farbstoff- und Auslösemodul verbindbar, sodass der Austausch des Farbstoff- und Auslösemoduls auch von nicht dafür speziell ausgebildeten Fachkräften sondern allgemein vom technisch versierten Personen ausgeführt werden kann, da für einen solchen Austausch kein Spezialwissen erforderlich ist. Insbesondere muss der Wertscheintransportbehälter, in dem das Farbstoff- und Auslösemodul angeordnet ist, für einen Austausch des Farbstoff- und Auslösemoduls nicht zum Hersteller oder spezialisierten Servicecentern transportiert werden. Dadurch kann der Aufwand für das Warten von Vorrichtungen zum Ungültigmachen von Wertscheinen, d.h. von sogenannten Tintenkits, die ein kombiniertes Farbstoff- und Auslösemodul, eine Farbstoffverteileinheit, einer Steuereinheit und eine Batterie zur Stromversorgung der Steuereinheit und/oder der Auslöseeinheit zum Auslösen des Farbstoff- und Auslösemoduls umfassen können, einfach durchgeführt werden.

Besonders vorteilhaft ist es, wenn die Farbstoffverteileinheit mindestens ein Sprührohr umfasst, das in seiner Wandung mehrere Öffnungen zum Austritt des dem Sprührohr zugeführten Farbstoffs hat, durch die der Farbstoff zu den im Wertscheintransportbehälter befindlichen Wertscheinen gelangt. Dadurch können die insbesondere als Wertscheinstapel im Wertscheintransportbehälter angeordneten Wertscheine bei geeigneter Anordnung und Ausrichtung der Öffnungen zuverlässig eingefärbt werden, sodass die Steuereinheit bei mit Hilfe von Sensoren des Wertscheintransportbehälters detektierten Manipulationsversuchen das Farbstoff- und Auslösemodul derart ansteuert, dass dem Sprührohr Farbstoff mit einem solchen Druck zugeführt wird, das der durch die Öffnungen im Sprührohr austretende Farbstoff auf alle in einem Wertscheinaufnahmebereich des Wertscheintransportbehälters angeordneten Wertscheine abgibt und diese mit Hilfe des Farbstoffs ungültig macht.

Erfindungsgemäß hat die Vorrichtung mindestens zwei Farbstoff- und Auslösemodule, die in einem einzigen Wertscheintransportbehälter anordenbar sind. Vorzugsweise sind die Farbstoff- und Auslösemodule über jeweils eine lösbare Verbindung mit einer Farbstoffverteileinheit, vorzugweise mit jeweils einem Sprührohr, farbstoffdicht verbindbar. Die Verbindung zwischen dem Farbstoff- und Auslösemodul und der Farbstoffverteileinheit bzw. dem Sprührohr erfolgt vorzugsweise über eine Steckverbindung, wobei das Sprührohr bzw. ein Rohr der Farbstoffverteileinheit in eine Auslassöffnung des jeweiligen Farbstoff- und Auslösemoduls gesteckt wird. In der Öffnung und/oder am Rohr können Dichtmittel vorgesehen sein, durch die eine farbstoffdichte Verbindung zwischen dem Rohr und dem jeweiligen Farbstoff- und Auslösemodul durch ein einfaches Einstecken des Rohrs in die Auslassöffnung herstellbar ist. Besonders vorteilhaft ist es, wenn die mindestens zwei Farbstoff- und Auslösemodule mit Hilfe einer gemeinsamen Steuereinheit ansteuerbar sind, sodass beide Farbstoff- und Auslösemodule gleichzeitig ausgelöst werden und der von beiden Farbstoff- und Auslösemodulen bereitgestellte Farbstoff gleichzeitig auf die im Wertscheintransportbehälter befindlichen Wertscheine abgegeben wird. Dadurch ist eine einfache Ansteuerung der Farbstoff- und Auslösemodule möglich.

Besonders vorteilhaft ist es, wenn die Farbstoff- und Auslösemodule zu einer Baueinheit verbunden sind. Die Baueinheit ist über die lösbare Steckverbindung zwischen dem ersten Verbindungselement und dem zweiten Verbindungselement des Wertscheintransportbehälters mit dem Wertscheintransportbehälter verbindbar. Dadurch ist ein einfacher Austausch der die zwei Farbstoff- und Auslösemodule umfassenden Baueinheit möglich, sodass eine einfache und zeitsparende Austauschmöglichkeit aller im Wertscheintransportbehälter befindlichen Farbstoff- und Auslösemodule in einem Arbeitsgang möglich ist.

Ferner ist es vorteilhaft, wenn die Farbstoff- und Auslösemodule nebeneinander angeordnet sind, insbesondere wenn die Längsachsen der Farbstoff- und Auslösemodule auf parallelen Geraden angeordnet sind, die in einer zur Stapelrichtung eines im Wertscheintransportbehälter angeordneten Wertscheinstapels orthogonalen Ebene verlaufen. Vorzugsweise verläuft die Stapelrichtung entlang einer Normalen dieser Ebene. Besonders vorteilhaft ist es, wenn diese orthogonale Ebene parallel zur Stirnseite des Wertscheinstapels verläuft, wobei die Stirnseite des Wertscheinstapels durch die Vorder- und/oder Rückseite eines Wertscheins des Wertscheinstapels gebildet ist. Dadurch ist eine sehr platzsparende Anordnung der Farbstoff- und Auslösemodule vor oder hinter dem Wertscheinstapel übereinander möglich. Die Farbstoff- und Auslösemodule haben vorzugsweise eine zylinderförmige Grundform, d. h. sie haben zumindest in einem Teilbereich einen kreisrunden Querschnitt, wobei die Längsachse durch den Mittelpunkt des kreisrunden Querschnitts verläuft.

Besonders vorteilhaft ist es, wenn die Farbstoff- und Auslösemodule baugleich sind. Dadurch ist eine kostengünstige Fertigung der Farbstoff- und Auslösemodule möglich. Ferner ist dadurch eine einfache und platzsparende Anordnung der Farbstoff- und Auslösemodule im Wertscheintransportbehälter möglich. Besonders vorteilhaft ist es, wenn die Austrittsöffnung der Farbstoff- und Auslösemodule auf einander gegenüberliegenden Seiten angeordnet sind, sodass die erste Austrittsöffnung auf der einen Seite einer zur beiden Längsachsen der Farbstoff- und Auslösemodule orthogonal angeordneten und die Farbstoff- und Auslösemodule in ihrem Mittelbereich schneidenden Ebene und die zweite Austrittsöffnung auf der diese Ebene gegenüberliegenden Seite angeordnet sind. Vorzugsweise liegt die Längsachse des Wertscheinstapels in dieser Ebene. Dadurch können auf einfache Weise eine erste Farbstoffverteileinheit an einer Seite des Wertscheinstapels und eine zweite Farbstoffverteileinheit an einer der ersten Seite gegenüberliegenden zweiten Seite des Wertscheinstapels angeordnet sein, ohne dass druckmindernde Querverbindungen und Verteileinrichtungen erforderlich sind.

Es sind erfindungsgemäß mindestens zwei Farbstoff- und Auslösemodule vorgesehen, so dass ein erstes Ende des ersten Farbstoff- und Auslösemoduls in einem ersten Aufnahmebereich des ersten Verbindungselements aufgenommen ist, ein dem ersten Ende gegenüberliegendes zweites Ende des ersten Farbstoff- und Auslösemoduls in einem ersten Aufnahmebereich eines dritten Verbindungselement aufgenommen ist, ein erstes Ende des zweiten Farbstoff- und Auslösemoduls in einem zweiten Aufnahmebereichs des ersten Verbindungselement aufgenommen ist, ein dem ersten Ende gegenüberliegendes zweite Ende des zweiten Farbstoff- und Auslösemoduls in einem zweiten Aufnahmebereich des dritten Verbindungselements aufgenommen ist und durch das dritte Verbindungselement eine lösbare Steckverbindung mit einem vierten Verbindungselement des Wertscheintransportbehälters herstellbar ist. Das vierte Verbindungselement ist vorzugsweise fest mit dem Wertscheintransportbehälter verbunden oder in ein Bauteil des Wertscheintransportbehälters integriert. Dadurch können die beiden Farbstoff- und Auslösemodule mit Hilfe des ersten und dritten Verbindungselements sowohl zu einer Baueinheit zusammengefasst werden als auch über die beiden lösbaren Steckverbindungen einfach als Baueinheit gemeinsam mit dem Wertscheintransportbehälter verbunden und von diesem getrennt werden. Die Enden der Farbstoff- und Auslösemodule können über geeignete Verbindungsarten, wie Presspassungen, Schnappverbindungen oder mit Hilfe von Sicherungsmitteln, wie Muttern, Schrauben oder Sicherungsringe, oder mit Hilfe von Klebstoff oder über Schweißverbindungen jeweils mit dem jeweiligen Verbindungselement verbunden sein. Dabei können an gegenüberliegenden Enden der Farbstoff- und Auslösemodule auch unterschiedliche Verbindungsarten vorgesehen sein. Auch können die Verbindungselemente in das Farbstoff- und Auslösemodulintegriert sein, insbesondere in das Gehäuse eines Farbstoff- und Auslösemoduls integriert sein. Durch die zwei lösbaren Steckverbindungen zwischen dem ersten und zweiten bzw. dritten und vierten Verbindungselement ist eine sichere Aufnahme der Farbstoff- und Auslösemodule im Wertscheintransportbehälter möglich, wobei bei geeigneter Anordnung die beiden Steckverbindungen gleichzeitig hergestellt oder gelöst werden können. Vorzugsweise werden die Farbstoff- und Auslösemodule einfach aus dem Wertscheintransportbehälter herausgezogen, wobei beim Herausziehen die Steckverbindungen zwischen dem ersten und zweiten Verbindungselement sowie zwischen dem dritten und vierten Verbindungselement gleichzeitig gelöst werden. Dadurch ist sowohl ein sicherer Halt der Farbstoff- und Auslösemodule im Wertscheintransportbehälter durch die beiden Steckverbindungen gewährleistet als auch ein einfaches Entfernen der Farbstoff -und Auslösemodule aus dem Wertscheintransportbehälter möglich.

Besonders vorteilhaft ist es, wenn ein Sicherungselement zum Sichern der Farbstoff- und Auslösemodule im Wertscheintransportbehälter in der Position, in der das erste Verbindungselement und das zweite Verbindungselement über die Steckverbindung miteinander verbunden sind, vorgesehen ist. Dabei kann das Sicherungselement derart ausgebildet sein, dass es die Steckverbindung zwischen dem ersten Verbindungselement und dem zweiten Verbindungselement durch eine zusätzliche formschlüssige Verbindung sichert, dass das Farbstoff- und Auslösemodul mit Hilfe des Sicherungselements über eine formschlüssige Verbindung mit dem Wertscheintransportbehälter verbindbar ist oder dass das erste Verbindungselement und/oder das dritte Verbindungselement mit dem Wertscheintransportbehälters über eine formschlüssige Verbindung verbindbar sind.

Besonders vorteilhaft ist es, wenn über die Steckverbindung zwischen dem ersten Verbindungselement und dem zweiten Verbindungselement bzw. zwischen dem dritten Verbindungselement und dem vierten Verbindungselement eine kraftschlüssige Verbindung zwischen dem Wertscheintransportbehälter und den mindestens zwei Farbstoff- und Auslösemodulen herstellbar ist. Dadurch ist ein einfaches Herstellen und Trennen der Steckverbindung möglich. Besonders vorteilhaft ist es, wenn der Wertscheintransportbehälter einen Aufnahmebereich zur Aufnahme der Wertscheine hat, wobei der Aufnahmebereich über eine mit Hilfe eines Verschlusselements verschließbaren Zugangsöffnungen zugänglich ist. Dabei können die Wertscheine sowohl in einem den Aufnahmebereich bereitstellenden Rollenspeicher oder als Wertscheinstapel im Aufnahmebereich aufgenommen sein.

Ferner ist es vorteilhaft, wenn die Vorrichtung einer Batterie zur Stromversorgung einer Steuereinheit und/oder einer Auslöseeinheit zum Steuern bzw. Auslösen des Farbstoff- und Auslösemoduls bzw. der Farbstoff- und Auslösemodule hat, die nur bei geöffneter Zugangsöffnung zugänglich ist. Dadurch können Manipulationsversuche der Stromversorgung wirksam verhindert werden, da die Stromversorgung nur bei dem mit Hilfe von Sensoren überwachten Öffnen der Zugangsöffnung erreichbar ist, sodass bei einer aktivierten Vorrichtung zum Ungültigmachen von Wertscheinen, d.h. bei aktiviertem Tintenkit, die im Aufnahmebereich befindlichen Wertscheine bereits beim Öffnen der Zugangsöffnung, insbesondere beim Öffnen eines die Zugangsöffnung verschließbaren Deckels ungültig gemacht werden.

Besonders vorteilhaft ist es, wenn ein bei geöffneter Zugangsöffnung zugängliches Batteriefach vorgesehen ist, das mit Hilfe eines Batteriefachdeckels verschlossen werden kann. Dadurch kann die Batterie im Batteriefach auf einfache Weise gesichert werden, sodass zum einen die Batterie auch beim Transport des Wertscheintransportbehälters nicht aus dem Batteriefach herausfallen kann und zum anderen ein einfacher Austausch der im Batteriefach angeordneten Batterie möglich ist. Besonders vorteilhaft ist es, wenn die Batterie über ein fest mit der Batterie verbundenes Anschlusskabel und über eine Steckverbinderanordnung elektrisch mit einer Steuereinheit zum Ansteuern eines Zünders der Auslöseeinheit des Farbstoff- und Auslösemoduls verbindbar ist. Die Batterie kann dabei über Anschlussklemmen, Lötfahnen oder Steckverbinder mit dem Anschlusskabel verbunden sein. Durch das fest mit der Batterie verbundene Anschlusskabel kann dieses auf einfache Art und Weise mit einem geeigneten Steckverbinder des Wertscheintransportbehälters, insbesondere mit einem an der Steuereinheit vorgesehenen komplementären Steckverbinder, verbunden werden. Dadurch ist ein einfacher Austausch der Batterie möglich. Spezielle Fachkenntnisse oder besondere handwerkliche Fähigkeiten sind dazu nicht erforderlich.

Besonders vorteilhaft ist es, wenn das zweite Verbindungselement durch mindestens eine Ausnehmung in einer Seitenwand und/oder im Boden des Wertscheintransportbehälters gebildet ist und wenn das erste Verbindungselement durch ein zum zweiten Verbindungselement komplementären Kontaktbereich des Farbstoff- und Auslösemoduls gebildet ist. Dadurch können einfache und kostengünstige Verbindungselemente bereitgestellt werden, durch die eine sichere Steckverbindung zwischen dem Farbstoff- und Auslösemodul und dem Wertscheintransportbehälter möglich ist. Vorzugsweise sind die Steckverbindungen zwischen dem ersten Verbindungselement und dem zweiten Verbindungselement sowie zwischen dem dritten Verbindungselement und dem vierten Verbindungselement nicht elektrische Steckverbindungen sondern sind als Passung, insbesondere als Spielpassung, ausgebildet. Besonders vorteilhaft ist es, wenn das zweite Verbindungselement oder das zweite und das vierte Verbindungselement jeweils durch eine im Wertscheintransportbehälter gebildete Öffnung und/oder durch ein im Wertscheintransportbehälter vorstehendes Element gebildet sind. Dadurch können diese Verbindungselemente einfach und kostengünstig bereitgestellt werden bzw. einfach in den Wertscheintransportbehälter integriert werden.

Besonders vorteilhaft ist es, wenn die Wertscheine als Stapel in einem Aufnahmebereich des Wertscheintransportbehälters aufnehmbar sind und wenn Farbstoffaustrittsöffnungen der Farbstoffverteileinheit zum Verteilen des Farbstoffs seitlich neben dem Stapel, vorzugsweise auf zwei einander gegenüberliegenden Seiten des Stapels parallel zur Stapelrichtung bzw. parallel zur Längsachse des Stapels, die sich in Stapelrichtung erstreckt, angeordnet sind. Dadurch kann auf einfache Weise sichergestellt werden, dass alle Wertscheine des Wertscheinstapels beim Auslösen der Farbstoff- und Auslösemoduls zumindest teilweise mit Farbstoff eingefärbt werden.

Besonders vorteilhaft ist es, wenn die Farbstoffverteileinheit bzw. die Farbstoffverteileinheiten über mindestens eine Schnappverbindung lösbar mit dem Wertscheintransportbehälter verbindbar sind. Sind die Farbstoffverteileinheiten als Sprührohr ausgeführt, sind diese über jeweils eine Schnappverbindung lösbar mit dem Wertscheintransportbehälter verbindbar. Dabei können die Schnappverbindungen über einen Adapter hergestellt werden. Ferner ist es dabei vorteilhaft, wenn die Farbstoffverteileinheit mit dem Adapter verbunden ist oder von diesem gehalten wird, wobei der Adapter über die Schnappverbindung lösbar mit dem Wertscheintransportbehälter verbindbar ist. Sind zwei Farbstoffverteileinheiten vorgesehen, kann jeweils eine Farbstoffverteileinheit mit jeweils einem Adapter verbunden sein oder durch diesen gehalten werden, wobei der Adapter wiederum über die Schnappverbindung lösbar mit dem Wertscheintransportbehälter verbindbar ist. Ferner kann die jeweilige Farbstoffverteileinheit mit dem Adapter über eine Schnappverbindung verbunden sein oder lediglich vom Adapter gehalten werden. Alternativ oder zusätzlich kann über den Adapter eine formschlüssige Verbindung zwischen der Farbstoffverteileinheit und dem Wertscheintransportbehälter, insbesondere mit Hilfe mindestens einer durch den Adapter bereitgestellten Schelle oder Klemme, verbindbar sein.

Dadurch ist einerseits ein einfaches Sichern der Farbstoffverteileinheit in der erforderlichen Position im Wertscheintransportbehälter möglich, andererseits kann über die Schnappverbindung die Verbindung zwischen der Farbstoffverteileinheit und dem Wertscheintransportbehälter auf einfache Weise wieder gelöst werden, sodass die Farbstoffverteileinheit bzw. die Farbstoffverteileinheiten beim Auswechseln des Farbstoff- und Auslösemoduls bzw. der Farbstoff- und Auslösemodule sowohl einfach vom Wertscheintransportbehälter als auch vom Farbstoff- und Auslösemodul getrennt werden können, wobei die Farbstoffverteileinheiten anschließend wieder mit dem weiteren Farbstoff- und Auslösemodul bzw. den weitern Farbstoff- und Auslösemodulen verbunden werden und anschließend mit dem Wertscheintransportbehälter verbunden werden können.

Ein zweiter Aspekt betrifft eine Geldkassette mit einer Vorrichtung gemäß Patentanspruch 1 oder einer oben angegebenen Weiterbildung dieser Vorrichtung, wobei die Geldkassette in einem Geldautomaten einsetzbar und aus diesem entnehmbar ist. Dadurch ist die Geldkassette einfach zum sicheren Transport von Wertscheinen, insbesondere von Banknoten, geeignet, wobei die in der Geldkassette befindlichen Wertscheine bei einem detektierten Manipulationsversuch an der Geldkassette mit Hilfe der Vorrichtung ungültig gemacht werden können. Die Geldkassette ist somit geeignet, Wertscheine, insbesondere Banknoten, im Wertscheintransportbehälter zum Geldautomaten zu transportieren und von einem vom Geldautomaten weg, insbesondere zu einer anderen Bankfiliale, zu einer Zentrale der Bank, zu einer Landeszentralbank, zur Bundesbank und/oder zu einem Einzelhändler, zu transportieren.

Werden die Wertscheine im Wertscheintransportbehälter als Stapel gespeichert, ist es vorteilhaft, wenn die Wertscheine im Aufnahmebereich des Wertscheintransportbehälters dann auf ihre Längsseite stehend angeordnet sind, wenn die Geldkassette in einer Zuführ- und/oder Entnahmeposition im Geldautomaten angeordnet ist, wobei die Wertscheine über eine Zuführ- und/oder Entnahmeöffnung dem Wertscheintransportbehälter zuführbar bzw. aus diesem entnehmbar sind.

Der Wertscheintransportbehälter kann dabei insbesondere eine Geldkassette, vorzugsweise eine Recyclinggeldkassette, eine Auszahlgeldkassette oder eine Einzahlgeldkassette sein. Wahlweise oder alternativ können die Wertscheintransportbehälter in anderen Vorrichtungen zur Handhabung von Wertscheinen, wie einer automatischen Tresorkasse oder einem Einzelhandelskassensystem, zugeführt werden.

Schnappverbindungen sind Verbindungen zwischen zwei Bauelementen, bei denen sich ein Flügelteil elastisch verformt und sich anschließend lösbar oder unlösbar mit einem entsprechenden Kontaktbereich des zweiten Bauelements verhakt. Es liegt also ein Formschluss vor. Das Flügelteil ist im ersten Bauteil ausgebildet oder mit diesem fest verbunden. Bei Schnappverbindungen erfolgt somit vorzugsweise eine Funktionsintegration der Verbindungselemente in die Bauteile, durch die eine signifikante Vereinfachung der Montageprozesse erfolgen kann. Insbesondere können die Montageprozesse bei geeigneter Ausbildung der Schnappverbindung werkzeuglos ausgeführt werden. Bei den angegebenen Ausführungsformen und Weiterbildungen sind die Schnappverbindungen vorzugsweise als werkzeuglos herstellbar und werkzeuglos wiederverbindbare Schnappverbindungen ausgeführt.

Der Farbstoff ist vorzugsweise ein Flüssigfarbstoff oder ein die Wertscheine zersetzende oder beschädigende Flüssigkeit. Der Flüssigfarbstoff wird auch als Tinte bezeichnet.

Weitere Merkmale und Vorteile der Erfindung ergeben sich aus der folgenden Beschreibung, die in Verbindung mit den beigefügten Figuren die Erfindung anhand von Ausführungsbespielen näher erläutert.

Es zeigen:
- Figur 1: eine perspektivische Darstellung eines geschlossenen Wertscheintransportbehälters;
- Figur 2: eine zweite perspektivische Darstellung des Wertscheintransportbehälters nach Figur 1 mit geöffnetem Deckel;
- Figur 3: eine Schnittdarstellung des Wertscheintransportbehälters nach den Figuren 1 und 2 entlang der Schnittebene A-A nach Figur 2 als Draufsicht;
- Figur 4: eine Schnittdarstellung von Ausschnitten des Wertscheintransportbehälters zusammen mit Abschnitten einer Adapterschiene zum Verbinden eines Sprührohrs zum Verteilen von Farbstoff;
- Figur 5: eine perspektivische Darstellung eines Ausschnitts eines Grundkörpers des Wertscheintransportbehälters nach den Figuren 1 bis 4, wobei zur bessern Sichtbarkeit von Komponenten einer in den Wertscheintransportbehälter integrierten und als Tintenkit bezeichneten Vorrichtung zum Ungültigmachen von im Wertscheintransportbehälter angeordneten Wertscheinen eine Vielzahl von weiteren Elementen des Wertscheintransportbehälters in dieser Darstellung ausgeblendet sind;
- Figur 6: eine perspektivische Darstellung der Komponenten des in den Wertscheintransportbehälter integrierten Tintenkits;
- Figur 7: eine perspektivische Darstellung einer zwei Farbstoff- und Auslösemodule umfassenden Baueinheit des Tintenkits mit einer Einrichtung zum Detektieren der Endposition eines einen Stapelbereich zum Stapeln der Wertscheine begrenzenden Andruckwagens;
- Figur 8: eine Schnittdarstellung der Baueinheit nach Figur 7;
- Figur 9: eine perspektivische Darstellung eines Verbindungselements zum Verbinden jeweils einer Seite der beiden Farbstoff- und Auslösemodule miteinander zu einer Baueinheit und zum Herstellen einer Steckverbindung mit dem Grundkörper des Wertscheintransportbehälters;
- Figur 10: eine perspektivische Darstellung der Vorderseite einer Anordnung mit einem Sprührohr zum Verteilen des Farbstoffs auf die im Aufnahmebereich des Wertscheintransportbehälters befindlichen Wertscheine und mit einer Adapterschiene zum Verbinden des Sprührohrs mit dem Grundkörper des Wertscheintransportbehälters;
- Figur 11: eine perspektivische Darstellung der Rückseite der Anordnung nach Figur 10; und
- Figur 12: eine perspektivische Darstellung eines Ausschnitts des Grundkörpers des Wertscheintransportbehälters ohne die Komponenten des Tintenkits.

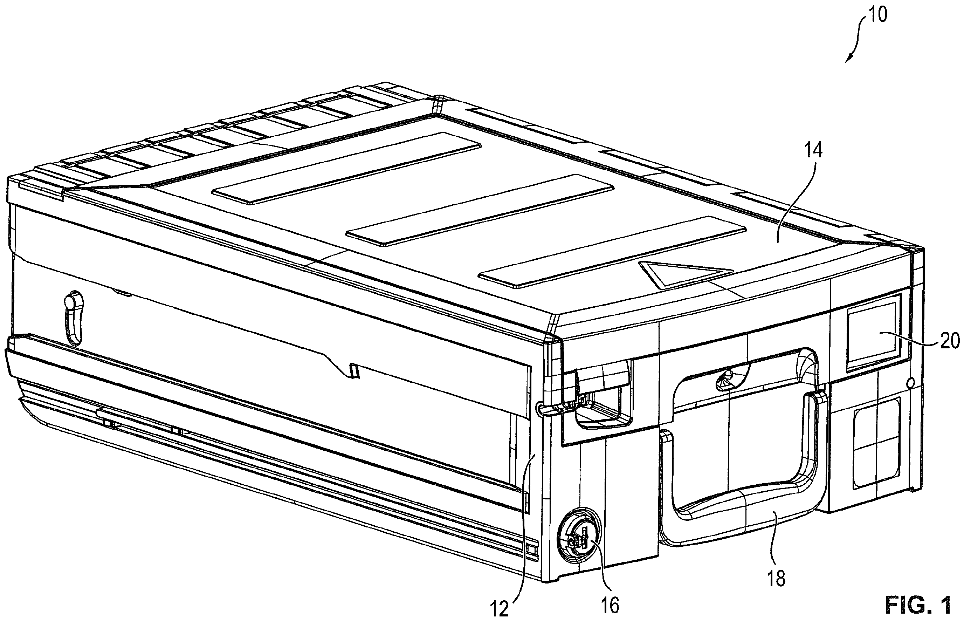

Figur 1 zeigt eine perspektivische Darstellung eines Wertscheintransportbehälters 10, der als Recyclingkassette dienen kann und in einen Recyclinggeldautomaten zur Ein- und Auszahlung von Wertscheinen, in einen Geldeinzahlautomaten zur Einzahlung von Wertscheinen und in einen Geldauszahlautomaten zur Auszahlung von Wertscheinen einsetzbar ist. Zusätzlich oder alternativ ist der Wertscheintransportbehälter 10 in automatische Tresorkassen und in Kassensysteme des Einzelhandels einsetzbar.

Der Wertscheintransportbehälter 10 hat einen Grundkörper 12 und einen über Scharniere mit dem Grundkörper 12 verbundenen Deckel 14, der in einer geschlossenen Position mit Hilfe eines Schlosses 16 verriegelbar ist. Der Deckel 14 ist mit Hilfe des Schlosses 16 auch entriegelbar, sodass der Deckel 14 mit Hilfe des Schlosses 16 geöffnet werden kann. Dadurch ist ein Zugriff auf einem im Wertscheintransportbehälter 10 vorgesehenen Banknotenaufnahmebereich sowie auf die im Wertscheintransportbehälter 10 angeordneten weiteren Komponenten möglich. Ferner hat der Wertscheintransportbehälter 10 einen Tragegriff 18, der das Tragen des Wertscheintransportbehälters 10 erleichtert sowie eine Anzeigeeinheit 20 zur Anzeige von Betriebsdaten und/oder eines elektronisches Siegels. Insbesondere kann der Betriebsstatus des Wertscheintransportbehälters 10 über die Anzeigeeinheit 20 angezeigt werden. Bei anderen Ausführungsformen haben die Wertscheintransportbehälter 10 keine Anzeigeeinheit 20 und/oder keinen Tragegriff 18.

In Figur 1 ist der Wertscheintransportbehälter 10 in seiner Einbaulage in einem Geldautomaten bzw. in seiner Einbaulage in einer anderen Vorrichtung zur Handhabung von Wertscheinen dargestellt, wobei der Grundkörper 12 unten und der Deckel 14 oben angeordnet sind. In dieser gezeigten Position können Wertscheine, insbesondere Banknoten, als Wertscheinstapel in dem Wertscheintransportbehälter 10 gespeichert sein, wobei die Wertscheine auf einer ihrer Längsseiten stehend angeordnet sind.

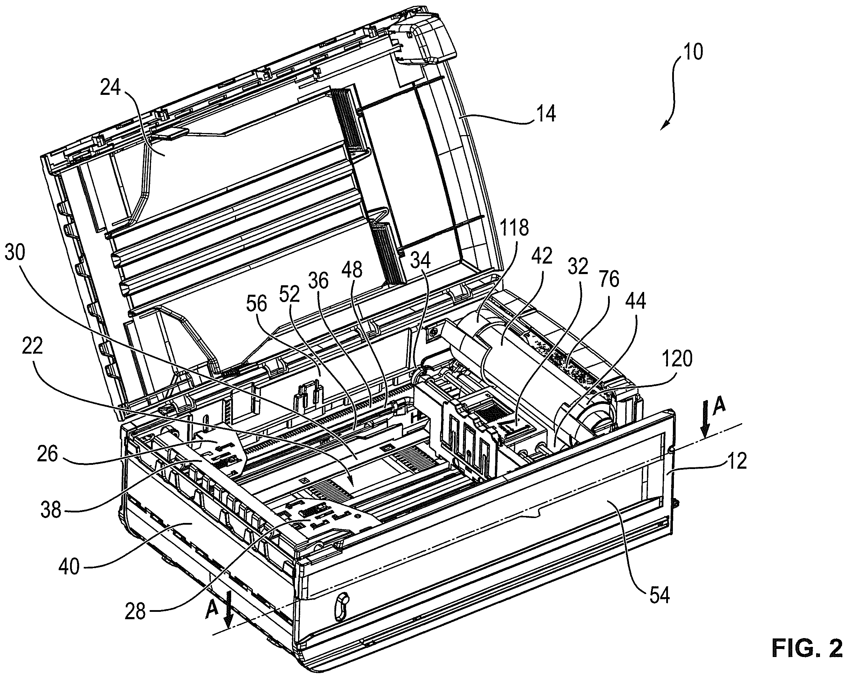

In Figur 2 ist der Wertscheintransportbehälter 10 nach Figur 1 in einer weiteren perspektivischen Darstellung gezeigt, wobei in dieser Darstellung der Deckel 14 entriegelt und geöffnet ist, sodass ein Zugriff auf eine Vielzahl von Komponenten möglich ist, die im Inneren des Wertscheintransportbehälters 10 angeordnet sind. Durch den geöffneten Deckel 14 ist ferner ein Zugriff auf den vom Wertscheintransportbehälter 10 zur Aufnahme von Wertscheinen bereitgestellten Aufnahmebereich 22 möglich. Dieser Aufnahmebereich 22 kann in seiner Größe abhängig von der Größe der aufzunehmenden Wertscheine mit Hilfe von Höhenbegrenzungselementen 24 bis 28 sowie Breitenbegrenzungselementen, von denen ein Breitenbegrenzungselement 30 in Figur 2 sichtbar ist, begrenzt. Die Begrenzungselemente 24 bis 30 sind jeweils stufenweise verstellbar, wodurch der Aufnahmebereich 22 an die Größe der im Aufnahmebereich 22 aufzunehmenden Wertscheine anpassbar ist.

Ferner ist im Inneren des Wertscheintransportbehälters 10 ein Andruckwagen 32 vorgesehen, der einen Antriebsmotor hat (nicht dargestellt), der beidseitig aus dem Andruckwagen 32 vorstehende Antriebszahnräder 34 antreibt, sodass der Andruckwagen 32 entlang von zwei an den Seitenwänden 54, 56 des Wertscheintransportbehälters 10 angeordneten Zahnschienen 36 verfahren werden kann. Mit Hilfe des Andruckwagens 32 kann der Aufnahmebereich 22 begrenzt und somit ein für den im Wertscheintransportbehälter 10 aufgenommenen Wertscheinstapel (nicht dargestellt) geeigneter Stapelbereich begrenzt werden. In Figur 2 ist der Andruckwagen 32 in seiner hinteren Endposition gezeigt, in der ein maximaler Stapelbereich bereitgestellt wird, sodass in dieser Position des Andruckwagens 32 der Stapelbereich mit dem Aufnahmebereich 22 übereinstimmt. Ferner umfasst der Wertscheintransportbehälter 10 eine Wertscheinrückzugsklappe 38, mit der ein im Stapelbereich 22 vorhandener Banknotenstapel bei der Entnahme des Wertscheintransportbehälters 10 aus einer entsprechenden Vorrichtung zur Handhabung von Wertscheinen weiter in den Aufnahmebereich 22 hinein gedrückt wird. Dadurch werden die Wertscheine auch beim Transport des Wertscheintransportbehälters 10 sicher im Aufnahmebereich 22 gehalten werden.

Ferner ist eine als Jalousie ausgebildete Verschlusseinheit 40 vorgesehen, die beim Einsetzen bzw. Einschieben des Wertscheintransportbehälters 10 in eine Vorrichtung zur Handhabung von Wertscheinen automatisch entriegelt und geöffnet werden kann. Durch geeignete Verriegelungselemente ist die Jalousie 40 nach der Entnahme des Wertscheintransportbehälters 10 aus einer Vorrichtung zur Handhabung von Wertscheinen geschlossen und verriegelt, wobei an sich bekannte Manipulationssensoren vorgesehen sind, die beispielsweise eine Manipulation der Jalousie 40 und/oder des Deckels 14 und/oder des Schlosses 16 detektieren und bei der Detektion eines unberechtigten Manipulationsversuchs in mindestens einer voreingestellten Betriebsart des Wertscheintransportbehälters 10 ein im Wertscheintransportbehälter 10 integriertes Tintenkit aktivieren, durch das die im Aufnahmebereich 22 als Stapel abgelegten Wertscheine mit einem Farbstoff des Tintenkits eingefärbt und dadurch ungültig gemacht werden. Dadurch werden Diebe daran gehindert, entwendete Wertscheine wirtschaftlich verwerten zu können, da dies mit Hilfe des Farbstoffs ungültig gemacht worden sind.

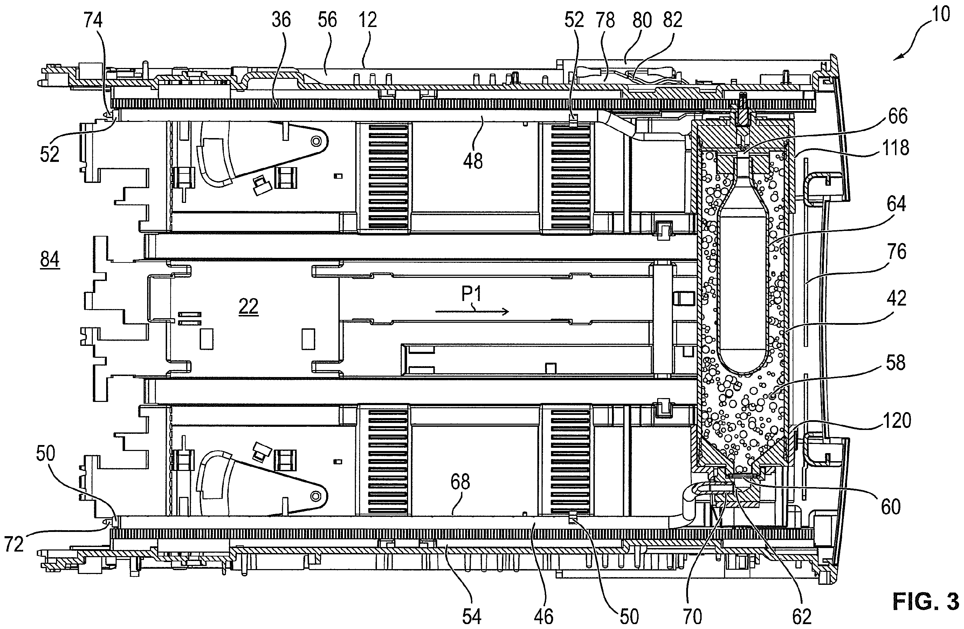

Im vorliegenden Ausführungsbeispiel umfasst das Tintenkit ein erstes Farbstoff- und Auslösemodul 42 sowie ein erstes Sprührohr 46 (Figur 3), das mit Hilfe einer ersten Halteschiene 50 mit einer ersten Behälterseitenwand 54 verbunden ist. Ferner umfasst das Tintenkit ein zweites Farbstoff- und Auslösemodul 44. Ein Auslassbereich des zweiten Farbstoff- und Auslösemoduls 44 ist mit einem zweiten Sprührohr 48 verbunden, dass über eine zweite Halteschiene 52 an einer der ersten Seitenwand 54 gegenüberliegenden zweiten Seitenwand 56 befestigt ist. Die Sprührohre 46, 48 haben jeweils mehrere Auslassöffnungen entlang gegenüberliegenden Seiten des Aufnahmebereichs 22, die in Richtung des Aufnahmebereichs 22 gerichtet sind, sodass der aus diesen Auslassöffnungen der Sprührohre 46, 48 austretende Farbstoff bei einer Aktivierung der Farbstoff- und Auslösemodule 42, 44 auf die Wertscheine eines im Aufnahmebereich 22 angeordneten Wertscheinstapels abgegeben wird.

Figur 3 zeigt eine Schnittdarstellung des Wertscheintransportbehälters 10 entlang der in Figur 2 angegebenen horizontalen Schnittebene als Draufsicht. Zur besseren Übersichtlichkeit ist in Figur 3 eine Vielzahl von Elementen gegenüber Figur 2 ausgeblendet. Entsprechend der Schnittebene A-A ist das erste Farbstoff- und Auslösemodul 42 geschnitten dargestellt. Das erste Farbstoff- und Auslösemodul 42 hat einen Farbstoffaufnahmebereich 58, der über eine Berstscheibe 60 gegenüber einem Auslassbereich 62 des ersten Farbstoff- und Auslösemoduls 42 verschlossen ist. Ferner umfasst das erste Farbstoff- und Auslösemodul 42 einen Druckbehälter 64, der im Inneren des ersten Farbstoff- und Auslösemoduls 42 angeordnet ist und der sich im Farbstoffaufnahmebereich 58 befindet. In dem Druckbehälter 64 befindet sich ein unter Druck stehendes Gas oder eine beim Öffnen des Druckbehälters 64 zu Gas verdampfende Flüssigkeit, insbesondere gasförmiges CO₂ oder flüssiges CO₂.

Der Druckbehälter 64 ist mit Hilfe einer Verschlussanordnung 66 verschlossen, die durch eine Steuereinheit zum Öffnen der Verschlussanordnung 66 angesteuert werden kann, sodass das Gas aus dem Druckbehälter 64 in den Farbstoffaufnahmebereich 58 austritt und den Druck im Farbstoffaufnahmebereich 58 derart erhöht, dass die Berstscheibe 60 berstet und der Farbstoff aus dem Farbstoffaufnahmebereich 58 in das erste Sprührohr 56 gedrückt und aus dem im Sprührohr 56 vorgesehenen Öffnungen austritt und in den Aufnahmebereich 22 abgegeben wird. Eine der Öffnungen des ersten Sprührohrs 46 ist beispielhaft mit dem Bezugszeichen 68 bezeichnet. Ein Ende des ersten Sprührohrs 46 ist in den Auslassbereich 62 des ersten Farbstoff- und Auslösemoduls 42 eingesteckt und über eine als O-Ring ausgebildete Dichtung 70 im Auslassbereich 62 abgedichtet. Das gegenüberliegende Ende des Sprührohrs 46 ist mit einem Verschlusselement 72 farbstoffdicht verschlossen, sodass der durch das Farbstoff- und Auslösemodul 42 in das Sprührohr 46 gedrückten Farbstoff nur an den Öffnungen 68 aus dem Sprührohr 46 entweichen kann.

Das erste Farbstoff- und Auslösemodul 42 und das zweite Farbstoff- und Auslösemodul 44 sind baugleich ausgeführt und in Betriebslage des Wertscheintransportbehälters 10 übereinander angeordnet, wobei der Auslassbereich 62 des ersten Farbstoff- und Auslösemoduls 42 an dem der ersten Seitenwand 54 zugewandten Ende des ersten Farbstoff- und Auslösemoduls 42 angeordnet ist und ein Auslassbereich des zweiten Farbstoff- und Auslösemoduls 44 an dem der zweiten Seitenwand 56 zugewandten Ende des zweiten Farbstoff- und Auslösemoduls 44 angeordnet ist. In den Auslassbereich des zweiten Farbstoff- und Auslösemoduls 44 ist ein Ende des zweiten Sprührohrs 48 in gleicher Weise eingeführt, wie dies für das erste Sprührohr 46 bereits beschrieben worden ist. Auch das zweite Sprührohr 48 ist im Auslassbereich mit Hilfe einer als O-Ring ausgeführten Dichtung farbstoffdicht angeordnet. Das gegenüberliegende Ende des zweiten Sprührohrs 48 ist mit einem zweiten Verschlusselement 74 verschlossen.

Die Steuereinheit zum Auswerten der Sensorsignale nicht dargestellter Manipulationssensoren zur Detektion von Manipulationsversuchen sowie zur optionalen Einstellung der Betriebsart des Wertscheintransportbehälters 10 ist in den Wertscheintransportbehälter 10 integriert, wobei eine Platine 76 der Steuereinheit in Figur 3 dargestellt ist. Ferner erfolgt die Stromversorgung zum Bereitstellen der Versorgungsspannung der Steuereinheit 76 sowie zum Bereitstellen der Energie zum Aktivieren der Öffnung der Verschlussanordnung 66 des ersten Farbstoff- und Auslösemoduls 44 sowie einer baugleichen Verschlussanordnung des zweiten Farbstoff- und Auslösemoduls 44 mit Hilfe einer Batterie 78. Die Batterie 78 ist einem Batteriefach 80 angeordnet, dass in die zweite Seitenwand 56 integriert ist. Die Batterie 78 hat ein fest mit der Batterie 78 verbundenes Anschlusskabel 82. Das andere Ende des Anschlusskabels 82 ist über einen elektrischen Steckverbinder mit einer weiteren nichtdargestellten Platine verbunden. Diese Platine sowie die Platine 76 sind als gedruckte Schaltungen ausgeführt, auf denen entsprechende Bauelemente angeordnet sind, um die erforderlichen elektrischen Verbindungen sowie die erforderlichen Steuer- und Speicherfunktionen bereitzustellen. Die Wertscheine werden bei geöffneter Jalousie 40 dem Aufnahmebereich 22 im Abschnitt 84 zugeführt und in die durch den Pfeil P1 angegebene Stapelrichtung beim Zuführen weiterer Wertscheine hineingeschoben. Ferner sind das erste Farbstoff- und Auslösemodul 42 und das zweite Farbstoff- und Auslösemodul 44 übereinander angeordnet, wobei die Längsachsen 86 der Farbstoff- und Auslösemodule 42, 44 in einer Ebene liegen, zu der die Stapelrichtung P1 eine Normale ist. Dadurch ist eine platzsparende Anordnung der Farbstoff- und Auslösemodule 42, 44 im Wertscheintransportbehälter 10 in Stapelrichtung P1 gesehen hinter dem Aufnahmebereich 22 möglich. Ferner haben die Farbstoff- und Auslösemodule 42, 44 im vorliegenden Ausführungsbeispiel eine zylinderförmige Grundform. Bei anderen Ausführungsformen können die Farbstoff- und Auslösemodule 42, 44 andere Grundformen, insbesondere quadratische oder rechteckige Querschnitte, haben.

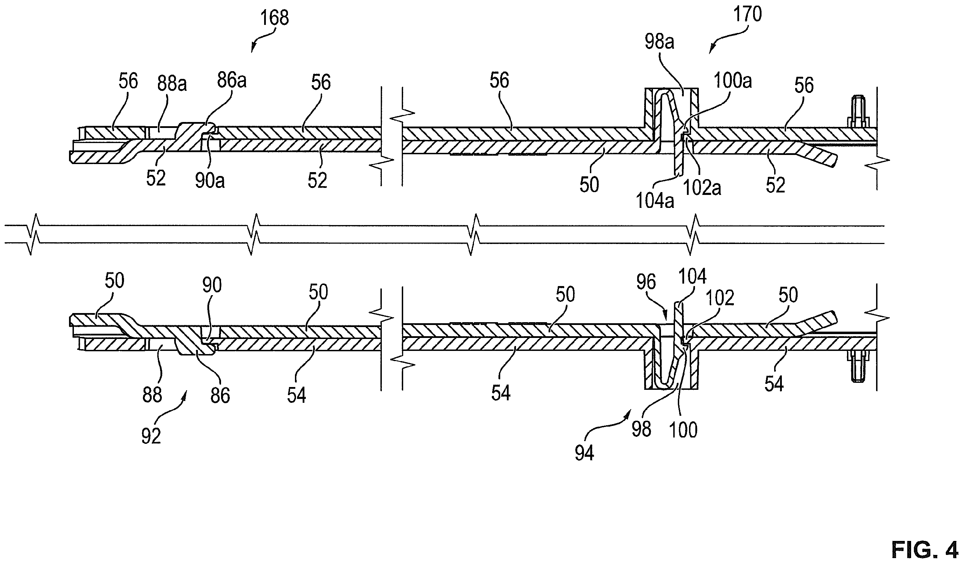

Figur 4 zeigt eine geschnittene Darstellung von Abschnitten der ersten Halteschiene 50 und Ausschnitten der ersten Seitenwand 54 entlang der Längsachse der ersten Halteschiene 50 sowie eine geschnittene Darstellung von Abschnitten der zweiten Halteschiene 52 und Ausschnitten der zweiten Seitenwand 56 entlang der Längsachse der zweiten Halteschiene 52.

Die Halteschiene 50 hat ein hackenförmiges Eingriffselement 86, das durch eine in der Seitenwand 54 gebildete Öffnung 88 hindurch gesteckt und in eine zur Stapelrichtung P1 parallele Einschubrichtung P2 verschoben worden ist, sodass das hakenförmige Element 86 einen Bereich 90 der Seitenwand 54 hintergreift. Die Öffnung 88, das hakenförmige Eingriffselement 86 und der Bereich 90 bilden einen ersten Verbindungsbereich 92 zwischen der ersten Halteschiene 50 und der ersten Seitenwand 54. In einem zweiten Verbindungsbereich 94 zwischen der erste Halteschiene 50 und der Seitenwand 54 ist eine Schnappverbindung ausgebildet, wobei in der ersten Halteschiene 50 ein Flügelelement 96 ausgebildet ist, das beim Einbringen des Flügelelements 96 in eine in der Seitenwand 54 vorgesehene Öffnung 98 elastisch verformt wird, wobei ein am Flügelelement 96 vorgesehener Vorsprung 100 aufgrund der durch die elastische Verformung bewirkende Rückstellkraft hinter einen in der Seitenwand 54 gebildeten Vorsprung 102 gedrückt wird und dort einrastet. Mit Hilfe eines herausragenden Teils 104 kann das Flügelelement 96 wieder so verformt werden, dass die Vorsprünge 100, 102 nicht mehr im Eingriff stehen, sodass das Flügelelement 96 aus der Öffnung 98 herausgezogen und die erste Halteschiene 50 von der Seitenwand 54 abgehoben werden kann. Somit ist eine werkzeuglose Verbindung zwischen der ersten Halteschiene 50 und der Seitenwand 54 des Wertscheintransportbehälters 10 möglich. In gleicher Weise wie für die erste Halteschiene 50 erläutert, ist die zweite Halteschiene 52 mit der zweiten Seitenwand 56 verbindbar, wobei die Anordnung dann spiegelverkehrt ist und Elemente mit gleichem Aufbau und/oder gleicher Funktion mit derselben Bezugszeichenziffer und dem angefügten Buchstaben a gekennzeichnet sind.

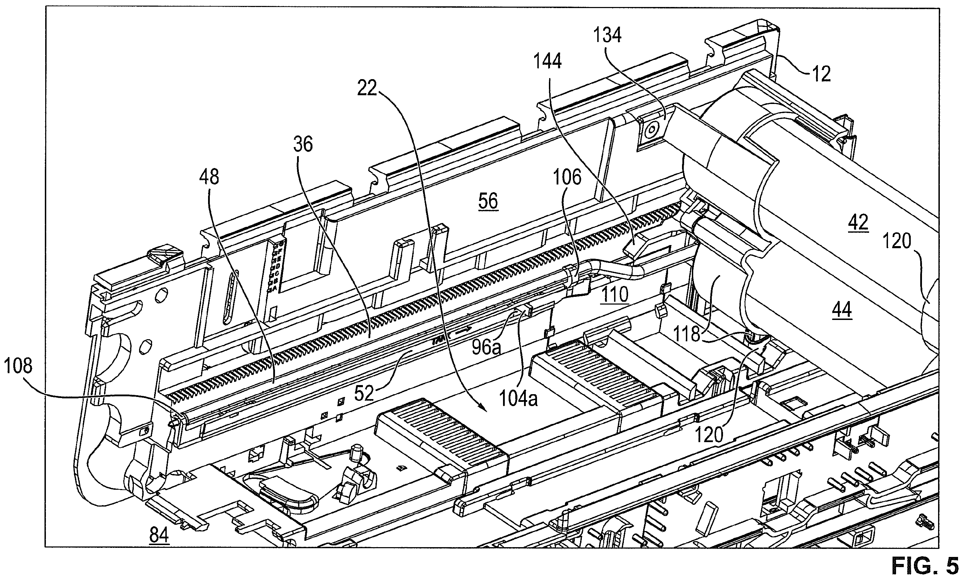

In Figur 5 ist eine perspektivische Darstellung eines Ausschnitts des Grundkörpers 12 des Wertscheintransportbehälters 14 dargestellt, wobei nur die in Figur 3 dargestellten Elemente gezeigt sind. Wie in Figur 5 gezeigt, umgreift ein erstes c- oder u-förmiges Verbindungselement 106 einen Teilbereich des zweiten Sprührohrs 48 und ein zweites c-förmiges oder u-förmiges Verbindungselement 108 einen Teilbereich des Verschlusselements 74, sodass das zweite Sprührohr 48 in einer gewünschten Position an der Seitenwand 54 mit Hilfe der zweiten Halteschiene 52 gehalten wird. Die Halteschienen 50, 52 sind wie bereits in Verbindung mit Figur 4 erläutert einfach werkzeuglos mit der jeweiligen Seitenwand 54, 56 verbindbar und von diesen wieder lösbar, in dem ein herausragender Teil 104, 104a eines Flügelelements 96, 96a der Halteschienen 50, 52 betätigt wird. Ferner ist in Figur 5 ein Batteriefachdeckel 110 zum Verschließen des in der Seitenwand 56 gebildeten Batteriefachs 80 dargestellt.

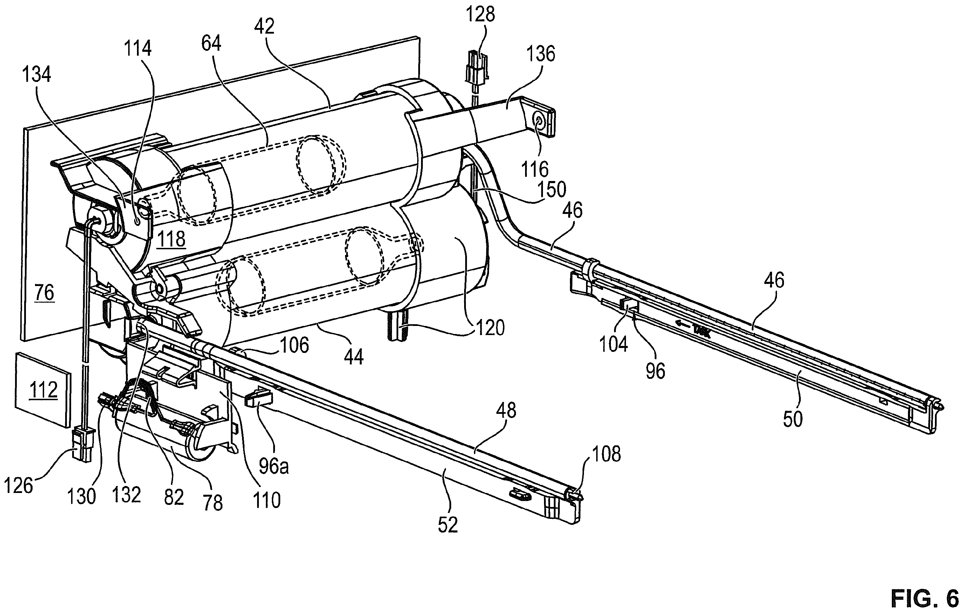

In Figur 6 sind die Komponenten der im Wertscheintransportbehälter angeordneten Vorrichtung zum Ungültigmachen von im Wertscheintransportbehälter angeordneten Wertscheinen, d. h. die Komponenten des Tintekits, gezeigt. Bis auf die als gedruckte Schaltung ausgeführten Platinen 76, 112 werden bei einer Wartung des Tintenkits alle übrigen dargestellten Komponenten von einer technisch versierten Person gehandhabt. Zum Aufbau des Tintenkits werden die herausragenden Teile 104, 104a der Flügelelemente 96, 96a der Halteschienen 50, 52 gelöst und die Halteschienen 50, 52 entfernt. Anschließend werden zwei durch die Öffnungen 114, 116 in die Behälterseitenwände 54, 56 eingebrachten Sicherungselemente entfernt und die zu einer Baueinheit zusammengefassten Farbstoff- und Auslösemodule 42, 44 werden nach oben aus dem Grundkörper 12 des Wertscheintransportbehälters 10 zusammen mit den mit dieser Baueinheit verbundenen Sprührohren 46, 48 herausgezogen, wobei das Verbindungselement 118 aus dem zum Verbindungselement 118 im Behälterboden komplementär ausgebildeten Verbindungselement 122 herausgezogen wird. Gleichzeitig wird das Verbindungselement 120 aus einem im Behälterboden ausgebildeten komplementären Verbindungselement 124 herausgezogen. Anschließend werden die Zündkabelanschlussstecker 126, 128 von komplementären Steckverbindern dar Platine 76 abgezogen, sodass die Farbstoff- und Auslösemodule 42, 44 zusammen mit den Verbindungselementen 118, 120 und dem Sprührohren 46, 48 aus dem Wertscheintransportbehälter 10 entfernt werden können. Anschließend kann der Batteriefachdeckel 110 geöffnet und die Batterie 78 aus dem Batteriefach 80 entnommen werden. Nachfolgend wird ein am Ende des Anschlusskabels 82 angebrachter Steckverbinder 130 von der Platine 112 abgezogen, sodass die Batterie 78 aus dem Wertscheintransportbehälter 10 entnommen werden kann. Anschließend wird eine neue Batterie 78 in das Batteriefach 80 eingesetzt. Anschließend wird der Steckverbinder des Anschlusskabels 82 mit einem komplementären Steckverbinder der Platine 112 verbunden. Nach dem Einsetzen und Anschließen der Batterie 78 wird der Batteriefachdeckel 110 wieder verschlossen.

Nachfolgend wird das Sprührohr 48 aus dem Aufnahmebereich 132 herausgezogen und das erste Sprührohr 46 und aus dem Auslassbereich 62 herausgezogen. Die verbleibende Baueinheit bestehend aus den Farbstoff- und Auslösemodulen 42, 44 und den Verbindungselementen 118, 120 wird gegen eine neue gleichartige Baueinheit ausgetauscht, wobei das erste Sprührohr 46 in den Auslassbereich 62 des ersten Farbstoff- und Auslösemoduls 42 und das zweite Sprührohr 48 in den Auslassbereich 132 des zweiten Farbstoff- und Auslösemoduls 44 der neuen Baueinheit eingeführt wird. Anschließend wird die so gebildete Baueinheit in dem Wertscheintransportbehälter 10 eingesetzt, wobei die vorstehenden Kontaktbereiche der Verbindungselemente 118, 120 und die komplementären Bereiche der Verbindungselemente 122, 124 im Behälterboden eingeführt werden. Ferner werden die Abstützbereiche 134, 136, in denen die Öffnungen 114, 116 ausgebildet sind, in komplementärer Aufnahmebereiche, die in den Seitenwänden 54, 56 ausgebildet sind, aufgenommen, sodass auf einfache Weise Steckverbindungen zwischen den Verbindungselementen 118, 120 der Farbstoff- und Auslösemodule 42, 44 und den dazu komplementären Verbindungselementen 122, 124 des Wertscheintransportbehälters 10 hergestellt sind. Dann werden die Steckverbinder 126, 128 der Zündkabel der Farbstoff- und Auslösemodule 42, 44 mit den komplementären Steckverbindern der Platine 76 verbunden. Abschließend werden die Sprührohre 46, 48 mit Hilfe der Halteschienen 50, 52 an den Seitenwänden 54, 56 des Wertscheintransportbehälters 10 befestigt.

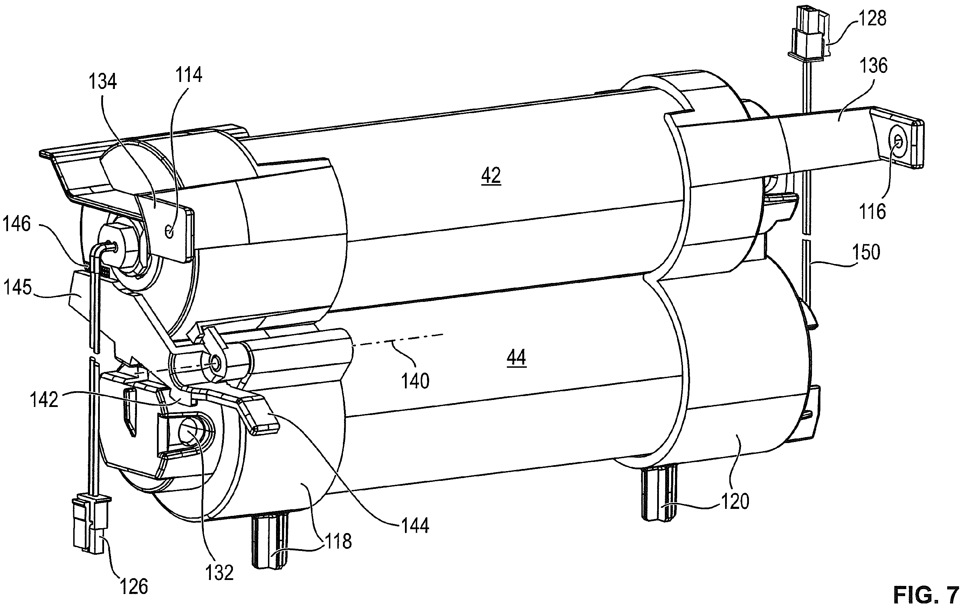

In Figur 7 ist eine vergrößerte perspektivische Darstellung der zwei Farbstoff- und Auslösemodule 42, 44 umfassenden Baueinheit des Tintenkits gezeigt, wobei bei dieser Darstellung eine um eine Drehachse 140 schwenkbare Schaltfahne 142 gezeigt ist, die verschwenkt wird, wenn der Andruckwagen 32 seine in Figur 2 dargestellte hintere Position erreicht hat. In dieser Position ist der Andruckwagen 32 gegen den Kontaktbereich 144 der Schaltfahne 142 gefahren worden, sodass die Schaltfahne 142 um die Drehachse 140 geschwenkt wird. Dadurch wird ein lichtreflektierender Teil 145 der Schaltfahne 142 vor einen am Verbindungselement 118 ausgebildeten lichtabsorbierenden Bereich 146 geschwenkt, sodass eine auf dem lichtabsorbierenden Bereich 146 gerichtete Reflexlichtschranke nach dem Verschwenken der Schaltfahne 142 Licht auf dem lichtreflektierenden Bereich 145 der Schaltfahne 142 abgibt und das reflektierte Licht detektiert, sodass dadurch mit Hilfe dieser Lichtschranke die Endposition des Andruckwagens 32 detektierbar ist.

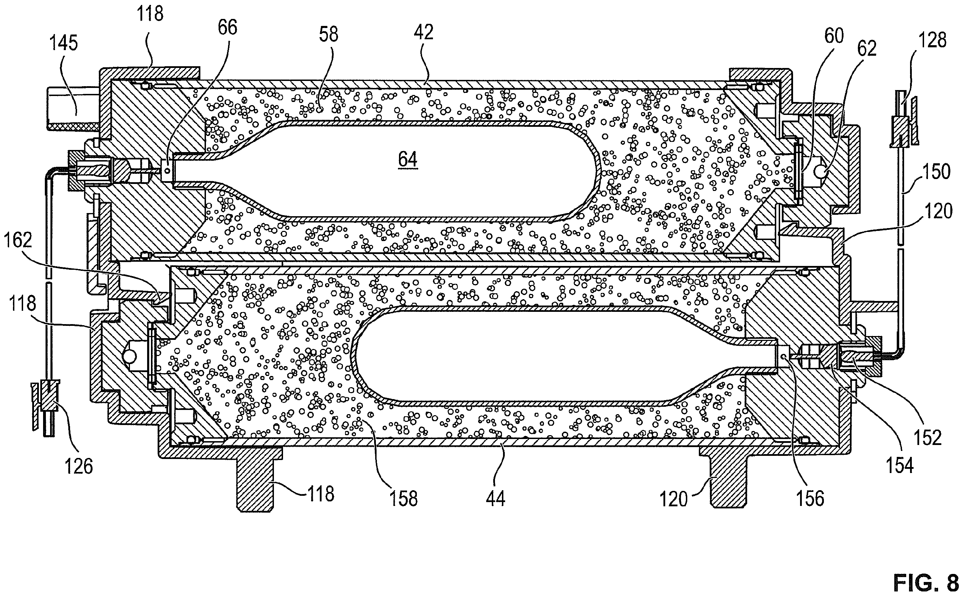

In Figur 8 ist eine Schnittdarstellung eines Ausschnitts der Baueinheit nach Figur 7 dargestellt. In dieser Schnittdarstellung ist auch der das Auslösegas enthaltene Druckbehälter 148 des zweiten Farbstoff- und Auslösemoduls dargestellt. Ein mit dem Zündkabelanschlussstecker 128 verbundenes Zündkabel 150 ist in eine Sprengkapsel 152 geführt, die mit einem entsprechenden Ansteuerimpuls, der von der Steuereinheit über das Zündkabel 150 zur Sprengkapsel 152 übertragen wird, auslösbar. Durch die Auslösung der Sprengkapsel 152 wird ein Schlagbolzen 154 durch eine verschlossene Öffnung des Druckbehälters 148 gestoßen, wodurch dieser geöffnet wird, sodass das im Druckbehälter 148 komprimierte Gas über die Austrittsöffnung 156 in den Farbstoffaufnahmebereich 158 gelangt und den dort befindlichen Farbstoff in das zweite Sprührohr 48 und weiter durch dessen Auslassöffnungen 68 in den Aufnahmebereich 22 drückt.

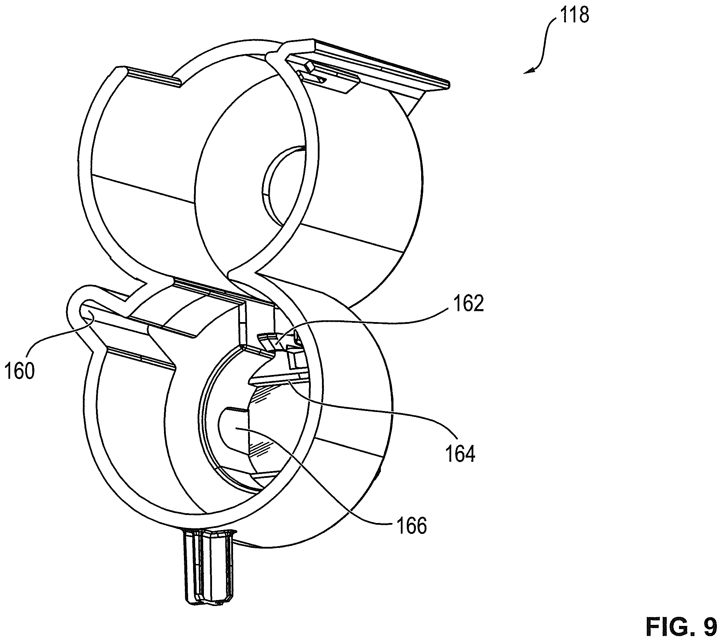

In Figur 9 ist das Verbindungselement 118 zum Verbinden jeweils einer Seite der beiden Farbstoff- und Auslösemodule 42, 44 dargestellt, dabei ist ein Lagerbereich 160 zur Aufnahme der schwenkbaren Schaltfahne 142 sichtbar. Ferner ist im Aufnahmebereich für das Ende des zweiten Farbstoff- und Auslösemoduls 44 eine Rastnase 142 zum Herstellen einer Schnappverbindung zwischen dem Verbindungselement 118 und dem zweiten Farbstoff- und Auslösemodul 44 gezeigt. Ferner ist ein Vorsprung 164 vorhanden, der in einen komplementär ausgebildeten Bereich des zweiten Farbstoff- und Auslösemoduls 44 eingreift, so dass durch den Vorsprung 164 und den komplementär ausgebildeten Bereich eine Verdrehsicherung zwischen dem Verbindungselement 118 und dem Farbstoff- und Auslösemodul 44 vorhanden ist. Ferner ist im Verbindungselement 118 eine Öffnung 166 ausgebildet, durch die das zweite Sprührohr 48 hindurchführbar ist, um in den Auslassbereich 132 des zweiten Farbstoff- und Auslösemoduls 44 eingeführt zu werden.

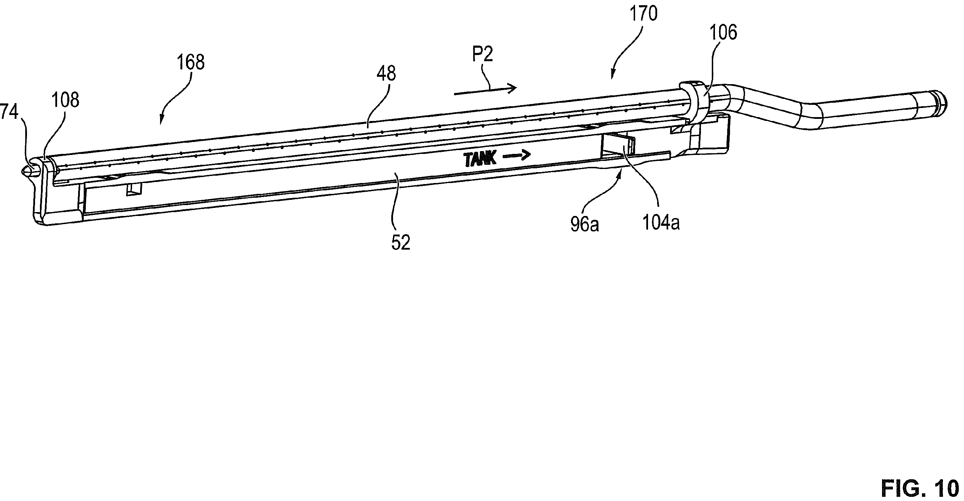

In Figur 10 ist eine erste perspektivische Darstellung des zweiten Sprührohrs 48 zusammen mit der zweiten Halteschiene 52 dargestellt, wobei die Bewegungsrichtung zum Herstellen der Verbindung zwischen der zweiten Halteschiene 52 und der Behälterwand 56 im ersten Verbindungsbereich 168 durch den Pfeil P2 angegeben ist. Im zweiten Verbindungsbereich 170 erfolgt die Verbindung zwischen der Halteschiene 52 und der zweiten Seitenwand 56 in gleicher Weise wie in Verbindung mit Figur 4 für die erste Halteschiene 50 mit der ersten Seitenwand 54 ausführlich beschrieben über eine Schnappverbindung.

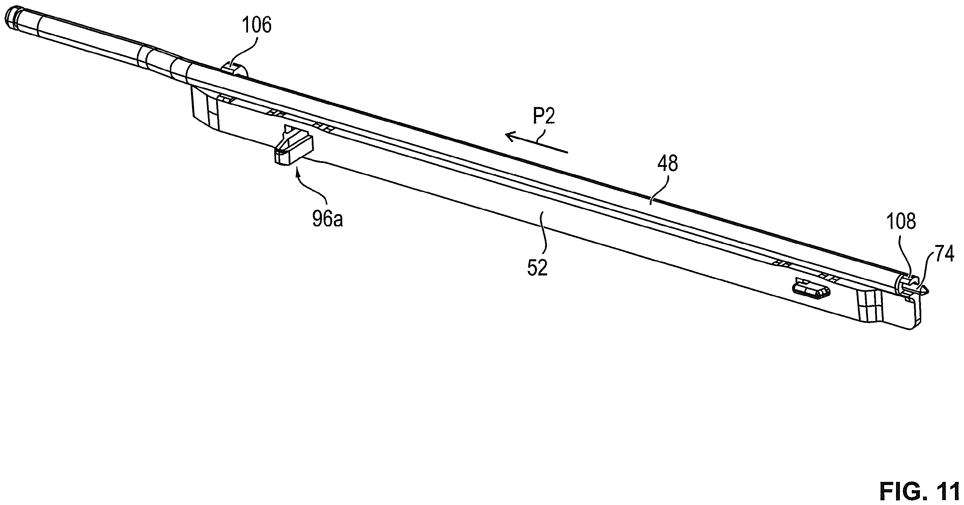

In Figur 11 ist eine weitere perspektivische Darstellung der Rückseite der das zweite Sprührohr 48 und die zweite Halteschiene 52 umfassenden Anordnung nach Figur 10 gezeigt.

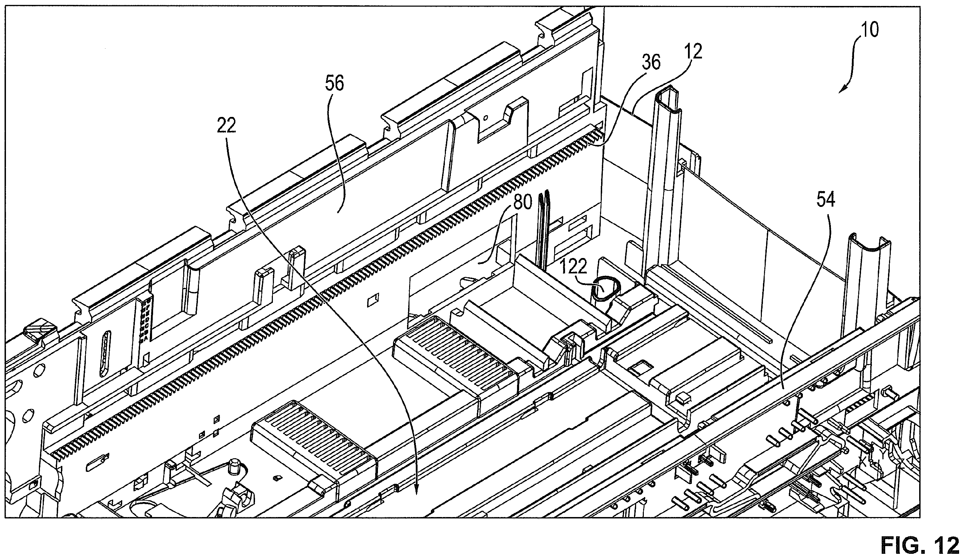

Figur 12 zeigt einen Ausschnitt des Grundkörpers 12 des Wertscheintransportbehälters 10 ohne die Komponenten des Tintenkits.

Bei anderen Ausführungsformen können die Kontaktbereiche der Verbindungselemente zum Verbinden der Farbstoff- und Auslösemodule 42, 44 mit dem Wertscheintransportbehälter 10 eine andere Form, insbesondere auch einen im Wesentlichen rechteckigen Querschnitt oder trapezförmigen Querschnitt, haben.

### Bezugszeichenliste

- 10: Wertscheintransportvorrichtung
- 12: Grundkörper
- 14: Deckel
- 16: Schloss
- 18: Tragegriff
- 20: Anzeige
- 22: Aufnahmebereich
- 24, 26, 28: Höhenbegrenzungselement
- 30: Breitenbegrenzungselement
- 32: Andruckwagen
- 34: Antriebszahnrad
- 36: Zahnschiene
- 38: Wertscheinrückzugsklappe
- 40: Jalousie
- 42, 44: Farbstoff- und Auslösemodul
- 46, 48: Sprührohr
- 50, 52: Halteschiene
- 54, 56: Seitenwand
- 58: Farbstoffaufnahmebereich
- 60: Berstscheibe
- 62: Auslassbereich
- 64: Druckbehälter
- 66: Verschlussanordnung
- 68: Auslassöffnung
- 70: Dichtung
- 72, 74: Verschlusselement
- 76: Platine
- 78: Batterie
- 80: Batteriefach
- 82: Anschlusskabel
- 84: Abschnitt
- 86: hakenförmiges Eingriffselement
- 88: Öffnung
- 90: Bereich
- 92, 94: Verbindungsbereich
- 96, 96a: Flügelelement
- 98: Öffnung
- 100, 102: Vorsprung
- 104, 104a: herauskragendes Teil
- 106, 108: Halteelement
- 110: Batteriefachdeckel
- 112: Platine
- 114, 116: Öffnungen
- 118, 120, 122, 124: Verbindungselement
- 126, 128: Zündkabelanschlussstecker
- 130: Batterieanschlussstecker
- 132: Auslassöffnung
- 134, 136: Verbindungsbereich
- 140: Schwenkachse
- 142: Schaltfahne
- 144: Kontaktbereich
- 145: Reflektionsbereich
- 146: lichtabsorbierender Bereich
- 148: Druckbehälter
- 150: Zündkabel
- 152: Sprengkapsel
- 154: Schlagbolzen
- 156: Austrittsöffnung
- 158: Farbstoffaufnahmebereich
- 160: Lagerbereich
- 162: Rastnase
- 164: Vorsprung
- 166: Öffnung
- 168: erster Verbindungsbereich
- 170: zweiter Verbindungsbereich
- P1: Stapelrichtung
- P2: Einschieberichtung

## Patentansprüche

1. *Vorrichtung zum Ungültigmachen von Wertscheinen mit mindestens einem kombinierten Farbstoff- und Auslösemodul (42, 44), wobei das Farbstoff- und Auslösemodul (42, 44) über mindestens ein erstes Verbindungselement (118, 120)* der Vorrichtung *mit einem zum ersten Verbindungselement (118, 120) komplementären zweiten Verbindungselement (122, 124) eines Wertscheintransportbehälters (10) verbindbar ist,*
*mit einer Farbstoffverteileinheit (46, 48) zum Verteilen von aus einer Auslassöffnung (62, 132) des Farbstoff- und Auslösemoduls (42, 44) austretenden Farbstoff auf die Wertscheine,*
*wobei durch das erste Verbindungselement (118, 120) eine lösbare Steckverbindung mit dem zweiten Verbindungselement (122) herstellbar ist,* **dadurch gekennzeichnet, dass** *die Vorrichtung mindestens zwei Farbstoff- und Auslösemodule (42, 44) hat, die in dem einen Wertscheintransportbehälter (10) anordenbar sind, dass ein erstes Ende des ersten Farbstoff- und Auslösemoduls (42) in einem ersten Aufnahmebereich des ersten Verbindungselements (118) aufgenommen ist,*
*dass ein dem ersten Ende gegenüberliegendes zweites Ende des ersten Farbstoff- und Auslösemoduls (42) in einem ersten Aufnahmebereich eines dritten Verbindungselements (120)* der Vorrichtung *aufgenommen ist, dass ein erstes Ende des zweiten Farbstoff- und Auslösemoduls (44) in einem zweiten Aufnahmebereich des ersten Verbindungselements (118) aufgenommen ist, dass ein dem ersten Ende gegenüberliegendes zweites Ende des zweiten Farbstoff- und Auslösemoduls (44) in einem zweiten Aufnahmebereich des dritten Verbindungselements (120) aufgenommen ist, und*
*dass durch das dritte Verbindungselement (120) eine lösbare Steckverbindung mit einem vierten Verbindungselement* (124) *des Wertscheintransportbehälters (10) herstellbar ist.*

2. *Vorrichtung nach Anspruch 1, **dadurch gekennzeichnet, dass** die Farbstoffverteileinheit mindestens ein Sprührohr (46, 48) umfasst, das mehrere Austrittsöffnungen (68) zum Austritt des dem Sprührohr (46, 48) zugeführten Farbstoffs hat, durch die der Farbstoff zu den im Wertscheintransportbehälter (10) befindlichen Wertscheinen gelangt.*

3. *Vorrichtung nach Anspruch 1 oder 2, **dadurch gekennzeichnet, dass** die mindestens zwei Farbstoff- und Auslösemodule (42, 44) mit Hilfe einer gemeinsamen Steuereinheit (76) ansteuerbar sind.*

4. *Vorrichtung nach einem der vorhergehenden Ansprüche, **dadurch gekennzeichnet, dass** die Farbstoff- und Auslösemodule (42, 44) zu einer Baueinheit verbunden sind, wobei die Baueinheit über die lösbare Steckverbindung zwischen dem ersten Verbindungselement (118, 120) und dem zweiten Verbindungselement (122, 124) des Wertscheintransportbehälters (10) mit dem Wertscheintransportbehälter (10) verbindbar ist.*

5. *Vorrichtung nach einem der vorhergehenden Ansprüche, **dadurch gekennzeichnet, dass** die Farbstoff- und Auslösemodule (42, 44) nebeneinander angeordnet sind, insbesondere dass die Längsachsen der Farbstoff- und Auslösemodule (42, 44) auf parallelen Geraden angeordnet sind, die in einer zur Stapelrichtung (P1) eines im Wertscheintransportbehälters (10) angeordneten Wertscheinstapels orthogonalen Ebene verlaufen.*

6. *Vorrichtung nach einem der vorhergehenden Ansprüche, **dadurch gekennzeichnet, dass** die Farbstoff- und Auslösemodule (42, 44) baugleich sind.*

7. *Vorrichtung nach einem der vorhergehenden Ansprüche, **dadurch gekennzeichnet, dass** die Austrittsöffnungen (62, 132) der Farbstoff- und Auslösemodule (42, 44) auf einander gegenüberliegenden Seiten angeordnet sind.*

8. *Vorrichtung nach einem der vorhergehenden Ansprüche, **dadurch gekennzeichnet, dass** ein Sicherungselement zum Sichern der Farbstoff- und Auslösemodule (42, 44) im Wertscheintransportbehälter (10) in der Position, in der das erste Verbindungselement (118) und das zweite Verbindungselement (122) über die Steckverbindung miteinander verbunden sind, vorgesehen ist.*

9. *Wertscheintransportbehälter mit einer Vorrichtung nach einem der vorhergehenden Ansprüche, **dadurch gekennzeichnet, dass** das zweite Verbindungselement (122) durch mindestens eine Ausnehmung in einer Seitenwand und*/*oder im Boden des Wertscheintransportbehälters (10) gebildet ist, und dass das erste Verbindungselement (118) durch ein zum zweiten Verbindungselement (122) komplementären Kontaktbereich des Farbstoff- und Auslösemoduls (42, 44) gebildet ist.*

10. *Wertscheintransportbehälter mit einer Vorrichtung nach einem der vorhergehenden Ansprüche, **dadurch gekennzeichnet, dass** das zweite oder das zweite und vierte Verbindungselement (118, 120) jeweils durch eine im Wertscheintransportbehälter (10) ausgebildete Öffnung und*/*oder jeweils durch ein im Wertscheintransportbehälter (10) vorstehendes Element gebildet sind.*

11. *Vorrichtung nach einem der vorhergehenden Ansprüche* 1-8, ***dadurch gekennzeichnet, dass** die Farbstoffverteileinheiten (46, 48) über mindestens eine Schnappverbindung (94, 136) lösbar mit dem Wertscheintransportbehälter (10) verbindbar sind.*

12. *Vorrichtung nach einem der vorhergehenden Ansprüche* 1-8 oder 11, ***dadurch gekennzeichnet, dass** die Farbstoffverteileinheit (46, 48) mit einem Adapter (50, 52) verbunden ist, der über eine Schnappverbindung (94, 136) lösbar mit dem Wertscheintransportbehälter (10) verbindbar ist oder dass jeweils eine Farbstoffverteileinheit (46, 48) mit jeweils einem Adapter (50, 52) verbunden ist, der über eine Schnappverbindung (94, 136) lösbar mit dem Wertscheintransportbehälter (10) verbindbar ist.*

## Claims

1. Apparatus for invalidating notes of value,
having at least one combined dye and trigger module (42, 44), wherein the dye and trigger module (42, 44), can be connected, via at least one first connecting element (118, 120), to a second connecting element (122, 124) of a transporting container (10) for notes of value, said second connecting element being complementary to the first connecting element (118, 120),
having a dye-distributing unit (46, 48), by means of which dye which exits from an outlet opening (62, 132) of the dye and trigger module (42, 44) is distributed over the notes of value,
wherein the first connecting element (118, 120) can establish a releasable plug-fit connection with the second connecting element (122), **characterized**
**in that** the apparatus has at least two dye and trigger modules (42, 44), which can be arranged in the one transporting container (10) for notes of value,
**in that** a first end of the first dye and trigger module (42) is accommodated in a first accommodating region of the first connecting element (118),
**in that** a second end of the first dye and trigger module (42), said second end being located opposite the first end, is accommodated in a first accommodating region of a third connecting element (120),
**in that** a first end of the second dye and trigger module (44) is accommodated in a second accommodating region of the first connecting element (118),
**in that** a second end of the second dye and trigger module (44), said second end being located opposite the first end, is accommodated in a second accommodating region of the third connecting element (120), and
**in that** the third connecting element (120) can establish a releasable plug-fit connection with a fourth connecting element (120) of the transporting container (10) for notes of value.

2. Apparatus according to Claim 1, **characterized in that** the dye-distributing unit comprises at least one spray tube (46, 48), which has a plurality of exit openings (68) through which the dye fed to the spray tube (46, 48) can exit, and through which the dye passes to the notes of value located in the transporting container (10) for notes of value.

3. Apparatus according to Claim 1 or 2, **characterized in that** the at least two dye and trigger modules (42, 44) can be activated with the aid of a common control unit (76).

4. Apparatus according to one of the preceding claims, **characterized in that** the dye and trigger modules (42, 44) are connected to form a structural unit, wherein the structural unit can be connected to the transporting container (10) for notes of value via the releasable plug-fit connection between the first connecting element (118, 120) and the second connecting element (122, 124) of the transporting container (10) for notes of value.

5. Apparatus according to one of the preceding claims, **characterized in that** the dye and trigger modules (42, 44) are arranged one beside the other, in particular **in that** the longitudinal axes of the dye and trigger modules (42, 44) are arranged on parallel straight lines which run in a plane orthogonal to the stacking direction (P1) of a stack of notes of value arranged in the transporting container (10) for notes of value.

6. Apparatus according to one of the preceding claims, **characterized in that** the dye and trigger modules (42, 44) are of identical construction.

7. Apparatus according to one of the preceding claims, **characterized in that** the exit openings (62, 132) of the dye and trigger modules (42, 44) are arranged on opposite sides.

8. Apparatus according to one of the preceding claims, **characterized by** the provision of a securing element for securing the dye and trigger modules (42, 44) in the transporting container (10) for notes of value in the position in which the first connecting element (118) and the second connecting element (122) are connected to one another via the plug-fit connection.

9. Transporting container for notes of value having an apparatus according to one of the preceding claims, **characterized in that** the second connecting element (122) is formed by at least one aperture in a side wall and/or in the base of the transporting container (10) for notes of value, and **in that** the first connecting element (118) is formed by a contact region of the dye and trigger module (42, 44), said contact region complementing the second connecting element (122).

10. Transporting container for notes of value having an apparatus according to one of the preceding claims, **characterized in that** the second connecting element is, or the second and fourth connecting elements (118, 120) are, formed in each case by an opening which is made in the transporting container (10) for notes of value and/or in each case by an element which projects in the transporting container (10) for notes of value.

11. Apparatus according to one of the preceding Claims 1-8, **characterized in that** the dye-distributing units (46, 48) can be connected to the transporting container (10) for notes of value in a releasable manner via at least one snap-fit connection (94, 136).

12. Apparatus according to one of the preceding Claims 1-8 or 11, **characterized in that** the dye-distributing unit (46, 48) is connected to an adapter (50, 52), which can be connected to the transporting container (10) for notes of value in a releasable manner via a snap-fit connection (94, 136), or **in that** a respective dye-distributing unit (46, 48) is connected to a respective adapter (50, 52), which can be connected to the transporting container (10) for notes of value in a releasable manner via a snap-fit connection (94, 136) .

## Revendications

1. Dispositif de dégradation de billets de valeur :
avec au moins un module de coloration et de destruction (42, 44) combiné, le module de coloration et de destruction (42, 44) pouvant être relié à un deuxième élément de liaison (122, 124) d'un conteneur de billets de valeur (10) complémentaire du premier élément de liaison (118, 120) via au moins un premier élément de liaison (118, 120) ;
avec une unité de répartition du colorant (46, 48) servant à répartir le colorant sortant hors d'une ouverture de sortie (62, 132) du module de coloration et de destruction (42, 44) sur les billets de valeur ;
une liaison par enfichage amovible avec le deuxième élément de liaison (122) pouvant être établie par le biais du premier élément de liaison (118, 120) ;
**caractérisé en ce que** :
le dispositif a au moins deux modules de coloration et de destruction (42, 44) pouvant être agencés dans le conteneur de billets de valeur (10) ;
une première extrémité du premier module de coloration et de destruction (42) est logée dans une première zone de logement du premier élément de liaison (118) ;
une deuxième extrémité du premier module de coloration et de destruction (42) opposée à la première extrémité est logée dans la première zone de logement d'un troisième élément de liaison (120) ;
une première extrémité du deuxième module de coloration et de destruction (44) est logée dans une deuxième zone de logement du premier élément de liaison (118) ;
une deuxième extrémité du deuxième module de coloration et de destruction (44) opposée à la première extrémité est logée dans une deuxième zone de logement du troisième élément de liaison (120) ; et
une liaison par enfichage amovible avec un quatrième élément de liaison (120) du conteneur de billets de valeur (10) peut être établie via le troisième élément de liaison (120).

2. Dispositif selon la revendication 1, **caractérisé en ce que** l'unité de répartition du colorant comprend au moins un tube de pulvérisation (46, 48) ayant plusieurs ouvertures de sortie (68) pour la sortie du colorant amené par le tube de pulvérisation (46, 48) à travers lesquelles le colorant arrive dans les billets de valeur se trouvant dans le conteneur de billets de valeur (10).

3. Dispositif selon la revendication 1 ou 2, **caractérisé en ce que** les au moins deux modules de coloration et de destruction (42, 44) peuvent être commandés à l'aide d'une unité de commande (76) commune.

4. Dispositif selon l'une quelconque des revendications précédentes, **caractérisé en ce que** les modules de coloration et de destruction (42, 44) sont reliés à une unité de construction, l'unité de construction pouvant être reliée au conteneur de billets de valeur (10) via la liaison par enfichage amovible prévue entre le premier élément de liaison (118, 120) et le deuxième élément de liaison (122, 124) du conteneur de billets de valeur (10).

5. Dispositif selon l'une quelconque des revendications précédentes, **caractérisé en ce que** les modules de coloration et de destruction (42, 44) sont disposés côte à côte, notamment **en ce que** les axes longitudinaux des modules de coloration et de destruction (42, 44) sont disposés sur des droites parallèles s'étendant dans un plan perpendiculaire à la direction d'empilement (P1) d'une pile de billets de valeur disposée dans le conteneur de billets de valeur (10) .

6. Dispositif selon l'une quelconque des revendications précédentes, **caractérisé en ce que** les modules de coloration et de destruction (42, 44) sont identiques en termes de construction.

7. Dispositif selon l'une quelconque des revendications précédentes, **caractérisé en ce que** les ouvertures de sortie (62, 132) des modules de coloration et de destruction (42, 44) sont disposées sur des côtés opposés les uns par rapport aux autres.

8. Dispositif selon l'une quelconque des revendications précédentes, **caractérisé en ce qu'**un élément de fixation est prévu pour fixer de façon sécurisée les modules de coloration et de destruction (42, 44) dans le conteneur de billets de valeur (10) dans la position dans laquelle le premier élément de liaison (118) et le deuxième élément de liaison (122) sont reliés entre eux via la liaison par enfichage.

9. Conteneur de billets de valeur avec un dispositif selon l'une quelconque des revendications précédentes, **caractérisé en ce que** le deuxième élément de liaison (122) est formé par au moins un évidement réalisé dans une paroi latérale et/ou dans le fond du conteneur de billets de valeur (10) et que le premier élément de liaison (118) est formé par une zone de contact du module de coloration et de destruction (42, 44) complémentaire par rapport à celle du deuxième élément de liaison (122).

10. Conteneur de billets de valeur avec un dispositif selon l'une quelconque des revendications précédentes, **caractérisé en ce que** le deuxième ou le deuxième et le quatrième élément de liaison (118, 120) sont respectivement formés par une ouverture réalisée dans le conteneur de billets de valeur (10) et/ou respectivement par un élément saillant dans le conteneur de billets de valeur (10).

11. Dispositif selon l'une quelconque des revendications précédentes 1 à 8, **caractérisé en ce que** les unités de répartition du colorant (46, 48) peuvent être reliées de façon amovible au conteneur de billets de valeur (10) via au moins une liaison encliquetée (94, 136) .

12. Dispositif selon l'une quelconque des revendications précédentes 1 à 8 ou 11, **caractérisé en ce que** l'unité de répartition du colorant (46, 48) est reliée à un adaptateur (50, 52) pouvant être relié de façon amovible au conteneur de billets de valeur (10) par le biais d'une liaison encliquetée (94, 136) ou que respectivement une unité de répartition du colorant (46, 48) est reliée à respectivement un adaptateur (50, 52) pouvant être relié de façon amovible au conteneur de billets de valeur (10) par le biais d'une liaison encliquetée (94, 136).
